(19) Europäisches Patentamt
European Patent Office
Office européen des brevets

(11) **EP 3 945 116 A1**

(12) **EUROPEAN PATENT APPLICATION**

(43) Date of publication:
**02.02.2022 Bulletin 2022/05**

(21) Application number: **20188897.1**

(22) Date of filing: **31.07.2020**

(51) International Patent Classification (IPC):
**C09D 5/02** *(2006.01)*      **C09D 125/14** *(2006.01)*
**C09D 133/10** *(2006.01)*      **C09D 179/02** *(2006.01)*

(52) Cooperative Patent Classification (CPC):
(C-Sets available)
**C09D 5/02; C08G 73/024; C09D 125/14;
C09D 133/10;** C08L 79/02          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **PPG Europe B.V.
1422 AD Uithoorn (NL)**

(72) Inventors:
• **DARCY, Stephane
  90300 Valdoie (FR)**
• **MONNIN, Yann
  92310 Sevres (FR)**

(74) Representative: **Appleyard Lees IP LLP
15 Clare Road
Halifax HX1 2HY (GB)**

(54) **COATING COMPOSITION AND USE THEREOF**

(57)    A coating composition comprising:
(a) a first polymeric coating binder, wherein the first polymeric coating binder comprises:
(i) an aqueous polymer latex of a film forming carboxylated polymer; and
(ii) a branched polyetheramine polyol dissolved in the aqueous phase of the polymer latex, wherein essentially all of the amino groups in the branched polyetheramine polyol are tertiary amine groups; and

(b) a second polymeric coating binder, wherein the second polymeric coating binder comprises an acrylic binder;
wherein the dry weight ratio of (a) to (b) is in the range of 70:30 to 20:80.

**(Cont. next page)**

(52)  Cooperative Patent Classification (CPC): (Cont.)

C-Sets
**C09D 133/10, C08L 25/14, C08L 79/02**

**Description**

**FIELD OF THE INVENTION**

The present invention relates to a coating composition. In particular, the present invention relates to coating compositions comprising a first binder, being an aqueous polymer latex of a film forming carboxylated polymer and a branched polyetheramine polyol, and a second binder, being an acrylic binder. The invention also relates to the use of such a coating composition as an interior and/or exterior architectural coating, such as a wall masonry paint. The invention also relates substrate having applied thereon such a coating composition.

**BACKGROUND OF THE INVENTION**

Painters are required to apply paint in a variety of weather conditions. The drying speed of a paint or coating, in particular for outdoor use such as for example a masonry paint or a wood coating, is highly dependent on the weather conditions, in particular the atmospheric humidity, temperature and wind speed during application of the coating. For example, if the drying speed is too low, e.g. because of low temperature and/or high humidity, a sudden rainfall may spoil the coating. In contrast thereto, a high drying speed, e.g. at elevated temperatures and/or low humidity conditions, may result in a too short open times, which may lead to problems when applying the coating under these conditions.

Painters are also required to apply paints to a variety of substrates. Different substrates have different requirements from a coating. For example, the moisture vapour transmission of the coating is an important consideration, because some coatings are required to allow moisture vapour (such as water vapour) to exit the substrate through the coating.

It is an object of aspects of the present invention to provide a solution to one or more of the above mentioned problems.

**SUMMARY OF THE INVENTION**

According to the present invention there is provided a coating composition comprising:

(a) a first polymeric coating binder, wherein the first polymeric coating binder comprises:

(i) an aqueous polymer latex of a film forming carboxylated polymer; and
(ii) a branched polyetheramine polyol dissolved in the aqueous phase of the polymer latex, wherein essentially all of the amino groups in the branched polyetheramine polyol are tertiary amine groups; and

(b) a second polymeric coating binder, wherein the second polymeric coating binder comprises an acrylic binder;

wherein the dry weight ratio of (a) to (b) is in the range of 70:30 to 20:80.

There is also provided the use of a coating composition as an architectural coating such as an interior and/or exterior wall masonry paint, wherein the coating composition comprises:

(a) a first polymeric coating binder, wherein the first polymeric coating binder comprises:

(i) an aqueous polymer latex of a film forming carboxylated polymer; and
(ii) a branched polyetheramine polyol dissolved in the aqueous phase of the polymer latex, wherein essentially all of the amino groups in the branched polyetheramine polyol are tertiary amine groups; and

(b) a second polymeric coating binder, wherein the second polymeric coating binder comprises an acrylic binder;

wherein the dry weight ratio of (a) to (b) is in the range of 70:30 to 20:80.

There is also provided a substrate coated on at least a portion thereof with a coating, the coating being derived from a coating composition comprising:

(a) a first polymeric coating binder, wherein the first polymeric coating binder comprises:

(i) an aqueous polymer latex of a film forming carboxylated polymer; and
(ii) a branched polyetheramine polyol dissolved in the aqueous phase of the polymer latex, wherein essentially all of the amino groups in the branched polyetheramine polyol are tertiary amine groups; and

(b) a second polymeric coating binder, wherein the second polymeric coating binder comprises an acrylic binder;

wherein the dry weight ratio of (a) to (b) is in the range of 70:30 to 20:80.

**DETAILED DESCRIPTION OF THE INVENTION**

The coating composition comprises a first polymeric coating binder. The first polymeric coating binder comprises an aqueous polymer latex of a film forming carboxylated polymer.

By "film forming", and like terms, as used herein in the context of the polymer latex is meant the ability of the carboxylated polymer of the polymer latex to form a film on surfaces upon drying under application conditions. The polymer may have a film forming temperature of at most 50°C, such as at most 30°C.

The carboxylated polymer may have any suitable glass transition temperature (Tg). The carboxylated polymer may have a Tg from -30 to 60°C, such as from -20 to 60°C, such as from 0 to 50°C, or even from 5 to 40°C. As reported herein, the Tg was measured according to NF EN ISO 1 1357-2 (2014), based on the definitions in NF EN ISO 1 1357-1 (2009). All values for Tg reported herein were measured in this way.

By "carboxylated polymer", and like terms, as used herein is meant that the polymer of the latex bears carboxyl groups attached to the polymer backbone.

The carboxylated polymer may be formed from one more ethylenically unsaturated monomers having one or more carboxyl group. Suitable ethylenically unsaturated monomers include, but are not limited to, monoethylenically unsaturated monocarboxylic acids, such as $C_3$-$C_6$-monoethylenically unsaturated monocarboxylic acids monoethylenically unsaturated dicarboxylic acids, such as $C_4$-$C_6$-monoethylenically unsaturated dicarboxylic acids, esters, diesters and/or anhydrides of the aforementioned acids; and combinations thereof.

The ethylenically unsaturated monomers may comprise monoethylenically unsaturated monocarboxylic acids. Examples of suitable monoethylenically unsaturated monocarboxylic acids include, but are not limited to, acrylic acid, methacrylic acid, crotonic acid, 2-ethylpropenoic acid, 2-propylpropenoic acid, or combinations thereof.

The ethylenically unsaturated monomers may comprise monoethylenically unsaturated dicarboxylic acids. Examples of suitable monoethylenically unsaturated dicarboxylic acids include, but are not limited to, itaconic acid, fumaric acid or combinations thereof.

The ethylenically unsaturated monomers may comprise alkyl esters of monoethylenically unsaturated monomers. Examples of suitable alkyl esters of monoethylenically unsaturated monomers include, but are not limited to, $C_1$-$C_{20}$-alkyl esters of $C_3$-$C_6$ monoethylenically unsaturated monocarboxylic acids; di-$C_1$-$C_{20}$-alkyl esters of $C_4$-$C_6$ monoethylenically unsaturated dicarboxylic acids; $C_5$-$C_{20}$-cycloalkyl esters of $C_3$-$C_6$ monoethylenically unsaturated monocarboxylic acids, hydroxyalkyl esters of monoethylenically unsaturated $C_3$-$C_6$ monocarboxylic acids; vinylesters of $C_1$-$C_{20}$-alkanoic acids and combinations thereof.

Examples of suitable $C_1$-$C_{20}$-alkyl esters of $C_3$-$C_6$ monoethylenically unsaturated monocarboxylic acids include, but are not limited to, $C_1$-$C_{20}$-alkyl esters of acrylic acid, for example, methyl acrylate, ethyl acrylate, n-propyl acrylate, isopropyl-acrylate, n-butyl acrylate, 2-butyl acrylate, isobutyl acrylate, n-pentyl acrylate, n-hexyl acrylate, n-octyl acrylate, 2-ethylhexyl acrylate, n-decyl acrylate, 2-propylheptyl acrylate, lauryl acrylate, $C_{12}$/$C_{14}$-alkyl acrylate or stearyl acrylate, $C_1$-$C_{20}$-alkylesters of methacrylic acid include, for example, methyl methacrylate, ethyl methacrylate, n-propyl methacrylate, isopropyl methacrylate, n-butyl methacrylate, 2-butyl methacrylate, isobutyl methacrylate, tert.-butyl methacrylate, n-pentyl methacrylate, n-hexyl methacrylate, n-octyl methacrylate, 2-ethylhexyl methacrylate, n-decyl methacrylate, 2-propylheptyl methacrylate, lauryl methacrylate, $C_{12}$/$C_{14}$-alkyl methacrylate or stearyl methacrylate and combinations thereof.

Examples of suitable di-$C_1$-$C_{20}$-alkyl esters of $C_4$-$C_6$ monoethylenically unsaturated dicarboxylic acids include, but are not limited to, di- $C_1$-$C_{20}$-alkyl esters of itaconic acid, di-$C_1$-$C_{20}$-alkyl esters of citraconic acid, di-$C_1$-$C_{20}$-alkyl esters of maleic acid, di-$C_1$-$C_{20}$-alkyl esters of fumaric acid and combinations thereof.

Examples of suitable $C_5$-$C_{20}$-cycloalkyl esters of $C_3$-$C_6$ monoethylenically unsaturated monocarboxylic acids include, but are not limited to, $C_5$-$C_{20}$-cycloalkyl esters of acrylic acid, $C_5$-$C_{20}$- cycloalkyl esters of methacrylic acid and combinations thereof.

Examples of suitable hydroxyalkyl esters of monoethylenically unsaturated $C_3$-$C_6$ monocarboxylic acids include, but are not limited to, hydroxyalkyl esters of acrylic acid (or hydroxyalkyl acrylates), such as hydroxy-$C_2$-$C_4$-alkylesters of acrylic acid, including 2-hydroxyethyl acrylate, 3-hydroxypropyl acrylate and 4-hydroxybutyl acrylate, for example; hydroxyalkyl esters of methacrylic acid (also referred to herein as hydroxyalkyl methacrylates), such as hydroxy-$C_2$-$C_4$-alkylesters of methacrylic acid, including 2-hydroxyethyl methacrylate, 3-hydroxypropyl methacrylate and 4-hydroxybutyl methacrylate, for example; and combinations thereof.

The ethylenically unsaturated monomers may comprise mono or diesters of monoethylenically unsaturated $C_3$-$C_6$ monocarboxylic acids. Monoesters of monoethylenically unsaturated $C_3$-$C_6$ monocarboxylic acids may comprise monoesters of monoethylenically unsaturated $C_3$-$C_6$ monocarboxylic acids with monoethylenically unsaturated aliphatic or cycloaliphatic monohydroxy compounds, such as the acrylates and the methacrylates of vinyl alcohol, allyl alcohol, 2-cyclohexen-1-ol or norbornenol. Diesters of monoethylenically unsaturated $C_3$-$C_6$ monocarboxylic acids may comprise diesters of monoethylenically unsaturated $C_3$-$C_6$ monocarboxylic acids with saturated aliphatic or cycloaliphatic diols, such as diesters of acrylic acid or methacrylic acid, including the diacrylates and the dimethacrylates of ethylene glycol, propylene glycol, 1,2-butanediol, 1,3-butanediol, neopentyl glycol and 1,2-cyclohexanediol.

The carboxylated polymer may be formed from one or more additional ethylenically unsaturated monomers. Suitable examples of additional ethylenically unsaturated monomers include, but are not limited to, vinyl aromatic monomers, such as mono-vinyl substituted aromatic hydrocarbons, including styrene, 2-methylstyrene, 4-methylstyrene, 2-n-butylstyrene, 4-n-butylstyrene, 4-n-decylstyrene and alpha-methylstyrene, for example; divinyl aromatic compounds, such as 1,3-divinyl benzene and 1,4-divinyl benzene, for example; $C_2$-$C_6$-monoolefines; butadiene; multiethylenically unsaturated monomers, such as monomers having at least 2 non-conjugated ethylenically unsaturated double bounds; primary amides of monoethylenically unsaturated monomers; monoethylenically unsaturated monomers bearing urea or keto groups; monoethylenically unsaturated monomers which bear at least one tri-$C_1$-$C_4$-alkoxysilane group; and combinations thereof.

Examples of suitable primary amides of monoethylenically unsaturated monomers include, but are not limited to, primary amides of monoethylenically unsaturated $C_3$-$C_8$ monocarboxylic acids, such as acrylamide and methacrylamide, N-$C_1$-$C_{10}$ alkyl amides of monoethylenically unsaturated $C_3$-$C_6$ monocarboxylic acids, such as N-$C_1$-$C_{10}$ alkyl amides of acrylic acid or methacrylic acid, N-methyl acrylamide, N-ethyl acrylamide, N-propyl acrylamide, N-isopropyl acrylamide, N-butyl acrylamide, N-methyl methacrylamide, N-ethyl methacrylamide, N-propyl methacrylamide, N-isopropyl methacrylamide and N-butyl methacrylamide and combinations thereof.

Examples of suitable monoethylenically unsaturated monomers bearing urea or keto groups include, but are not limited to, 2-(2-oxo-imidazolidin-1-yl)ethyl (meth)acrylate, 2-ureido (meth)acrylate, N-[2-(2-oxooxazolidin-3-yl)ethyl] methacrylate, acetoacetoxyethyl acrylate, acetoacetoxypropyl methacrylate, acetoacetoxybutyl methacrylate, 2-(acetoacetoxy)ethyl methacrylate, diacetoneacrylamide (DAAM) and diacetonemethacrylamide.

Examples of suitable monoethylenically unsaturated monomers which bear at least one tri-$C_1$-$C_4$-alkoxysilane group include, but are not limited to, vinyl trimethoxysilane, vinyl triethoxysilane, methacryloxyethyl trimethoxysilane, methacryloxyethyl triethoxysilane, and combinations thereof.

The carboxylated polymer may be formed from acrylic acid, methacrylic acid, crotonic acid, 2-ethylpropenoic acid, 2-propylpropenoic acid, itaconic acid, fumaric acid or combinations thereof.

The carboxylated polymer may be formed from (A) 70 to 99.95 w% of monomers selected from the group consisting of $C_1$-$C_{20}$-alkyl esters of $C_3$-$C_6$ monoethylenically unsaturated monocarboxylic acids, di-$C_1$-$C_{20}$-alkyl esters of $C_4$-$C_6$ monoethylenically unsaturated dicarboxylic acids, $C_5$-$C_{20}$-cycloalkyl esters of $C_3$-$C_6$ monoethylenically unsaturated monocarboxylic acids, vinylesters of $C_1$-$C_{20}$-alkanoic acids, vinyl aromatic monomers, $C_2$-$C_6$-monoolefines and butadiene, based on the total solid weight of the monomers from which the carboxylated polymer is formed, (B) 0.05 to 10 wt% of monomers selected from the group consisting of monoethylenically unsaturated $C_3$-$C_6$ monocarboxylic acids and monoethylenically unsaturated $C_4$-$C_6$ dicarboxylic acids, based on the total solid weight of the monomers from which the carboxylated polymer is formed; and (C) 0 to 20 wt% of one or more monomers selected from the group consisting of primary amides of monoethylenically unsaturated $C_3$-$C_8$ monocarboxylic acids, monoethylenically unsaturated monomers bearing urea or keto groups, hydroxyalkyl esters of monoethylenically unsaturated $C_3$-$C_6$ monocarboxylic acids, monoethylenically unsaturated monomers which bear at least one tri-$C_1$-$C_4$-alkoxysilane group and multiethylenically unsaturated monomers based on the total solid weight of the monomers from which the carboxylated polymer is formed. Component (C) may be different to component (A).

Component (A), as defined above, may comprise at least one monomer selected from $C_1$-$C_{20}$-alkyl esters of acrylic acid and $C_5$-$C_{20}$-alkylesters of methacrylic acid and at least one monomer selected from vinyl aromatic monomers, and $C_1$-$C_4$-alkyl esters of methacrylic acid and mixtures thereof.

Component (B), as defined above, may comprise acrylic acid, methacrylic acid and/or combinations thereof.

The ethylenically unsaturated monomers from which the carboxylated polymer is formed may have a solubility in deionized water of at most 50 g/l at 20°C.

The aqueous polymer latex of the carboxylated polymer may be obtained by radical emulsion polymerization. The aqueous polymer latex of the carboxylated polymer may be obtained by radical emulsion polymerization of one or more of the monomers defined above. Suitable radical emulsion polymerisation methods will be known to a person skilled in the art.

In the aqueous carboxylated polymer latex, the dispersed polymers may be in the form of polymer particles. The polymer particles may have an average diameter from 50 to 500 nanometers (nm), such as from 60 to 400 nm, or even from 80 to 300 nm. A reported herein, the average diameter of the polymer particles relates to the Z average particle diameter as determined by means of photon correlation spectroscopy (PCS), also known as quasielastic light scattering (QELS) or dynamic light scattering (DLS). The measurement method is described in the ISO 13321:1996 standard.

The polymers in the polymer dispersion may have a narrow particle size distribution as defined by the polydispersity index (Mw/Mn). The polydispersity index may be less than 0.2.

The first polymeric coating binder may comprise any suitable amount of the film forming carboxylated polymer. The first polymeric coating binder may comprise from 10 to 70 wt%, such as from 30 to 65 wt%, or even from 40 to 65 wt% of the of the film forming carboxylated polymer based on the total weight of the first polymeric coating binder.

The first polymeric coating binder comprises a branched polyetheramine polyol. The branched polyetheramine polyol is dissolved in the aqueous phase of the polymer latex. By "branched" and like terms as used herein is meant that the polyetheramine polyol does not have linear structure, but has an amount of branching points within the polymer backbone, which result in a branched polymer chain. Such branching points may be tri or tetra-substituted carbon atoms and/or tertiary amino groups. The branching points may be the tertiary amino groups.

The branched polyetheramine may have any suitable water solubility. The branched polyetheramine polyol may have a water solubility of at least 5 g/l, such as at least 10 g/l, such as at least 50 g/l, or even at least 100 g/l, at 20°C.

The branched polyetheramine polyol may be completely water miscible at 20°C.

In the branched polyetheramine polyol, essentially all of the amino groups in the branched polyetheramine polyol are tertiary amine groups. In this context, "essentially" means that at least 90%, such as at least 95%, such as at least 98%, or even at least 99% of the amino groups in the branched polyetheramine polyol are tertiary amine groups. The branched polyetheramine polyol may not have any detectable amounts of secondary and primary amino groups.

The branched polyetheramine polyol may contain on average less than 0.5 mol/kg of secondary and primary amino groups, if any. The polyetheramine polyol may contain on average less than 0.2 mol/kg, such as less than 0.1 mol/kg of secondary and primary amino groups, if any.

The branched polyetheramine polyol may contain on average from 4 to 8.2 mol/kg of tertiary amino groups. The polyetheramine polyol may contain on average from 5 to 8.0 mol/kg, such as from 5 to 7.9 mol/kg of tertiary amino groups.

The branched polyetheramine polyol may have any suitable anime number. The branched polyetheramine polyol may have an amine number from 100 to 700 mg KOH/g, such as from 200 to 500 mg KOH/g, determined according to the method described in DIN EN ISO 9702:1998. Besides determination of the total amine group content, this method allows for determination of the tertiary amine group content, the secondary amine group content, and the primary amine group content.

In addition to the amino groups, the branched polyetheramine polyol may contain hydroxyl groups. The branched polyetheramine polyol may have a hydroxyl number of at least 100 mg KOH/g, such as at least 200 mg KOH/g, or even at least 250 mg KOH/g. The branched polyetheramine polyol may have a hydroxyl number of up to 800 mg KOH/g, such as up to 700 mg KOH/g, or even up to 650 mg KOH/g. The branched polyetheramine polyol may have a hydroxyl number from 100 to 800 mg KOH/g, such as from 100 to 700 mg KOH/g, or even from 100 to 650 mg KOH/g. The branched polyetheramine polyol may have a hydroxyl number from 200 to 800 mg KOH/g, such as from 200 to 700 mg KOH/g, or even from 200 to 650 mg KOH/g. The branched polyetheramine polyol may have a hydroxyl number from 250 to 800 mg KOH/g, such as from 250 to 700 mg KOH/g, or even from 250 to 650 mg KOH/g.

As reported herein, the hydroxyl number was measured according to DIN 53240, part 2. All values for hydroxyl number reported herein were measured in this way.

The number of hydroxyl groups per molecule will depend on the number average molecular weight of the branched polyetheramine polyol and the degree of branching. The branched polyetheramine polyol may contain on average (number average) at least four, such as at least six, such as at least ten hydroxyl groups per molecule. However, in principle, there is no upper limit on the number of terminal or pendent functional groups. The branched polyetheramine polyol may contain on average (number average) at most 500, such as at most 200 terminal hydroxyl groups per molecule.

The branched polyetheramine polyol may have any suitable number average molecular weight (Mn). The branched polyetheramine polyol may have an Mn from 500 to 55,000 Daltons (Da = g/mol), such as from 1,000 to 40,000 Da. As reported herein, the Mn was determined by gel permeation chromatography using hexafluoroisopropanol as the mobile phase and polymethylmethacrylate as a standard.

The branched polyetheramine polyol may have any suitable weight average molecular weight (Mw). The branched polyetheramine polyol may have an Mw from 1,000 to 300,000 Daltons (Da = g/mol), such as from 2,000 to 200,000 Da, or even from 5,000 to 150,000 Da. As reported herein, the Mw was determined by gel permeation chromatography using hexafluoroisopropanol as the mobile phase and polymethylmethacrylate as a standard.

The branched polyetheramine polyol may have any suitable polydispersity, i.e. the ratio of Mw/Mn. The polyetheramine polyol may have a polydispersity from 1.1 to 25, such as from 1.5 to 20.

The branched polyetheramine polyol may have any suitable dynamic viscosity at 23°C. The branched polyetheramine polyol may have a dynamic viscosity at 23°C from 5 to 200 Pa.s, such as from 8 to 150 Pa.s. As reported herein, the dynamic viscosity was determined according to ASTM D7042 at 23°C.

The branched polyetheramine polyol may have any suitable Hazen colour number. The branched polyetheramine polyol may have a Hazen colour number from 100 to 600 (APHA). As reported herein the Hazen colour number was determined according to DIN ISO 6271.

The branched polyetheramine polyol may have any suitable glass transition temperature (Tg). The branched polyetheramine polyol may have a Tg of up to 50°C, such as up to 30°C, or even up to 10°C. The branched polyetheramine polyol may have a Tg from -55 to 30°C, such as from -55 to 10°C.

The branched polyetheramine polyol may be formed from at least one trialkanolamine. For the avoidance of doubt, the trialkanolamine, and other components from which the branched polyetheramine polyol may be formed, are monomers which may undergo a polycondensation reaction to form the polyetheramine polyol polymer. Suitable trialkanolamines will be known to a person skilled in the art. Examples of suitable trialkanolamines include, but are not limited to, tri-$C_2$-$C_8$-alkanol amines, such as tri-$C_2$-$C_4$-alkanol amines, for example, triethanolamine, tri-n-propanolamine, triisopropanolamine, tri-n-butanolamine, triisobutanolamine and combinations thereof. The alkanol groups of the trialkanolamine may be different or may be identical, such as identical. Thus, the trialkanolamine may be selected from tri-$C_2$-$C_8$-alkanol amines, such as tri-$C_2$-$C_4$-alkanol amines, wherein the alkanol groups are identical.

The branched polyetheramine may be formed from triethanolamine, triisopropanolamine or a mixture thereof.

The branched polyetheramine polyol may comprise only monomers selected from trialkanolamines, such as tri-$C_2$-$C_4$-alkanolamines, for example, triethanolamine, triisopropanolamine and/or tri-n-propanolamine. Thus, the branched polyetheramine polyol may consist of only monomers selected from trialkanolamines, such as tri-$C_2$-$C_4$-al-kanolamines, for example, triethanolamine, triisopropanolamine and/or tri-n-propanolamine.

However, the branched polyetheramine polyol may optionally be formed from at least one aliphatic or cycloaliphatic polyol. Thus, the branched polyetheramine polyol may be formed from at least one trialkanolamine and at least one aliphatic or cycloaliphatic polyol. Suitable examples of aliphatic or cycloaliphatic polyols include, but are not limited to, aliphatic diols, aliphatic polyols having more than 2 hydroxyl groups, cycloaliphatic diols, cycloaliphatic polyols having more than 2 hydroxyl groups and combinations thereof.

The aliphatic or cycloaliphatic polyols may comprise diols and aliphatic polyols having more than 2 hydroxyl groups. Examples of suitable aliphatic diols include $C_2$-$C_{20}$- diols, such as ethandiol, propandiol, butandiol, pentandiol, hexandiol, heptandiol, octandiol, and their structural isomers. Examples of suitable polyols having more than 2 hydroxyl groups are glycerol, pentaerythritol, trimethylolpropane, sorbitol, and the like. The polyols may also be alkoxylated, such as ethoxylated or propoxylated, for example. ethoxylated glycerol, propoxylated glycerol, ethylated pentaerythritol, propoxylated pentaerythritol, ethoxylated trimethylolpropane, propoxylated trimethylolpropane, ethoxylated sorbitol and propoxylated sorbitol. The degree of alkoxylation, i.e. the number average of alkyleneoxide moieties, may be up to 100, such as from 2 to 50.

Further examples of aliphatic diols include polyether diols of the general formula HO-$((CH_2)_n$-O$)_m$-H, wherein n is 1 to 10, such as 2 to 4, and m is 2 to 100. Suitable examples of polyether diols include, but are not limited to, polyethylene glycol, polypropylene glycol, polytetramethylene glycol and copolymers thereof.

The aliphatic or cycloaliphatic polyol may comprise an aliphatic or cycloaliphatic $C_2$-$C_8$-polyol.

The branched polyetheramine polyol may be formed from monomers comprising at least one trialkanolamine or a mixture of at least one trialkanolamine with an aliphatic or cycloaliphatic polyol.

The branched polyetheramine polyol may be formed from monomers comprising at least one trialkanolamine, such as tri-$C_2$-$C_4$-alkanolamine, or even triethanolamine, triisopropanolamine or a mixture thereof, and at least one aliphatic or cycloaliphatic $C_2$-$C_8$-polyol.

The branched polyetheramine polyol may be formed from monomers comprising triethanolamine, triisopropanolamine or a mixture thereof and at least one further polyol, such as an aliphatic or cycloaliphatic $C_2$-$C_8$-polyol.

The branched polyetheramine polyol may comprise any suitable amount of trialkanolamine monomer. The branched polyetheramine polyol may comprise at least 50 wt%, such as at least 70 wt%, or even at least 80 wt% trialkanolamine(s), based on the total solid weight of the monomers from which the branched polyetheramine polyol is formed.

The branched polyetheramine polyol may be formed from monomers comprising from 50 to 100 mol% trialkanolamine(s) and 0 to 50 mol% aliphatic or cycloaliphatic polyol(s), such as from 70 to 100 mol% trialkanolamine(s) and 0 to 30 mol% aliphatic or cycloaliphatic polyol(s), or even from 80 to 100 mol% trialkanolamine(s) and 0 to 20 mol% aliphatic or cycloaliphatic polyol(s), based on the total molar amount of the monomers from which the branched polyetheramine polyol is formed.

The branched polyetheramine polyol may be stable at room temperature for a prolonged period, such as for at least 10 weeks, for example. The polyetheramine polyols may be stable without exhibiting instances of clouding, precipitation, and/or significant increase in viscosity.

The branched polyetheramine polyol may be used without chemical modification or derivatization. However, a derivative of the branched polyetheramine polyol can optionally be used. Derivatives include those obtained by alkoxylation of the hydroxyl end groups of the non-derivatized branched polyetheramine polyol. Likewise, it is possible to modify the non-derivatized branched polyetheramine polyol with hydrophobic groups or hydrophilic groups.

The first polymeric coating binder may comprise any suitable amount of the branched polyetheramine polyol.

The first polymeric coating binder may comprise from 0.01 to 10 wt% such as from 0.05 to 7.5 wt%, or even from 0.1 to 5 wt% of the branched polyetheramine polyol based on the total weight of the carboxylated polymer of the aqueous polymer latex.

The film forming carboxylated polymer and the branched polyetheramine polyol may be present in any suitable form. For example, the film forming carboxylated polymer and branched polyetheramine polyol may be blended together, the film forming carboxylated polymer and branched polyetheramine polyol may be in the form of a block copolymer and/or the film forming carboxylated polymer and branched polyetheramine polyol may be grafted together.

The first polymeric coating binder comprises the aqueous polymer latex of a film forming carboxylated polymer as described herein, the branched polyetheramine polyol as described herein and water. The first polymeric coating binder may optionally comprise further components such as, for example, dispersants, biocides, rheology modifiers, coalescing agents and/or defoamers. Suitable further components will be known to a person skilled in the art.

The first polymeric coating binder is different from the second polymeric coating binder.

The second polymeric coating binder b) comprises an acrylic binder, which may be an aqueous acrylic binder.

The acrylic binder may comprise a polymer or copolymer formed from monomers including one or more acrylic monomer. The acrylic binder may be formed from monomers including at least 30wt% of one or more acrylic monomer (based on the total weight of the acrylic binder), such as at least 40wt% or at least 50wt% of one or more acrylic monomer (based on the total weight of the acrylic binder). The acrylic binder may be formed from monomers including at least 60wt% of one or more acrylic monomer (based on the total weight of the acrylic binder), such as at least 70wt% or at least 80wt% of one or more acrylic monomer (based on the total weight of the acrylic binder). The acrylic binder may be formed from monomers including at least 90wt% of one or more acrylic monomer (based on the total weight of the acrylic binder), such as at least 95wt% or at least 99wt% of one or more acrylic monomer (based on the total weight of the acrylic binder). The acrylic binder may be formed exclusively from one or more acrylic monomer.

Suitable acrylic monomers include $C_1$ to $C_{12}$ branched or linear alkyl esters of acrylic acid or methacrylic acid. Suitable acrylic monomers include methyl acrylate, ethyl acrylate, propyl acrylate, butyl acrylate, pentyl acrylate, hexyl acrylate, 2-ethylhexyl acrylate, methyl methacrylate, ethyl methacrylate, propyl methacrylate, butyl methacrylate, pentyl methacrylate, hexyl methacrylate, 2-ethylhexyl methacrylate.

The acrylic binder may be a copolymer formed from monomers including one or more acrylic monomer and one or more non acrylic monomer. The non acrylic monomer may be a non acrylic ethylenically unsaturated monomer.

The acrylic binder may be formed from monomers including at least 10wt% of one or more non acrylic monomer (based on the total weight of the acrylic binder), such as at least 20wt% or at least 30wt% of one or more non acrylic monomer (based on the total weight of the acrylic binder). The acrylic binder may be formed from monomers including at least 40wt% of one or more non acrylic monomer (based on the total weight of the acrylic binder), such as at least 50wt% or at least 60wt% of one or more non acrylic monomer (based on the total weight of the acrylic binder). The acrylic binder may be formed from monomers including at least 70wt% of one or more non acrylic monomer (based on the total weight of the acrylic binder), such as at least 80wt% or at least 85wt% of one or more non acrylic monomer (based on the total weight of the acrylic binder).

Examples of non acrylic monomers in this context include, ethylene, propylene, butylene, styrene and vinyl acetate.

The acrylic binder may be a copolymer formed from monomers including one or more acrylic monomer and a styrene monomer. Therefore, the acrylic binder may be a styrene acrylic copolymer.

The acrylic binder may be a copolymer formed from monomers including one or more acrylic monomer, ethylene monomers and vinyl acetate monomers. Therefore, the acrylic binder may comprise a vinyl ethylene acetate acrylic copolymer.

The acrylic binder may be substantially free from carboxylation. The acrylic binder may not be formed from acrylic acid or methacrylic acid.

The acrylic binder may have any suitable acid value (AV) expressed on solids. The acrylic binder may have an AV expressed on solids of from 0 to 5 mg KOH/g, such as from 0 to 3 mg KOH/g, such as from 0 to 2 mg KOH/g, such as from 0 to 1 mg KOH/g

The acid value (AV) expressed on solids may be measured by any suitable method. Methods to measure AV will be well known to a person skilled in the art. As reported herein, the AV was determined by titration with 0.1M methanolic potassium hydroxide (KOH) solution. In such a method, a sample of solid polymer (typically, 0.1 to 3g) is weighed accurately into a conical flask and is dissolved, using light heating and stirring as appropriate, in 25ml of dimethyl formamide containing phenolphthalein indicator. The solution is then cooled to room temperature and titrated with the 0.1 M methanolic potassium hydroxide solution. The resulting acid number is expressed in units of mg KOH/g and is calculated using the following equation:

$$\text{Acid value} = \frac{\underline{\text{titre of KOH solution (ml) x molarity KOH solution (M) x 56.1}}}{\text{weight of solid sample (g)}}$$

The acrylic binder may have a pH of at least 6.5, such as at least 7, or even at least 7.5. The acrylic binder may have a pH of less than 10.

The acrylic binder may have any suitable glass transition temperature (Tg). The acrylic binder may have a Tg from -20 to 60°C, such as from -10 to 40°C.

The Tg of the acrylic binder may be measured by any suitable method. Methods to measure Tg will be well known to a person skilled in the art. As reported herein, the Tg was measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

The acrylic binder may have any suitable Mw. The Mw of the acrylic binder may be at least 50,000 g/mol, such at least 75,000 g/mol, at least 100,000 g/mol or at least 125,000 g/mol. The Mw of the acrylic binder may be at least 150,000 g/mol. The Mw of the acrylic binder may be up to 500,000 g/mol, such as up to 450,000 g/mol, 400,000 g/mol or up to 350,000 g/mol. The Mw of the acrylic binder may be up to 300,000 g/mol, such as up to 250,000 g/mol.

The acrylic binder may have an Mw in the range from 50,000 g/mol to 500,000 g/mol, such as from 100,000 g/mol to 400,000 g/mol, such as from 150,000 g/mol to 250,00 g/mol.

As reported herein, the Mw was determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml).

All values for Mw reported herein were measured in this way.

Commercial examples of suitable acrylic binders include the following:

Acrylic polymers: Mowilith 7459 (commercially available from celanese); Plextol DS2610 (commercially available from Synthomer); Plextol L3851 (commercially available from Synthomer); Acronal 6270, Acronal A754, Acronal A684, and Acronal DS 6266 (Acronal materials commercially available from BASF).

Styrene acrylic copolymers: UCAR Latex DL 420 G (commercially available from Dow Chemicals); Revacryl DS2100 (commercially available from Synthomer); Mowilith LDM 6119 (commercially available from Celanese); Acronal S559, Acronal 6292X, Acronal ECO 6716, Acronal S562, and Acronal S790 (Acronal materials commercially available from BASF).

Vinyl ethylene acetate acrylic copolymers: Mowilith LDM 1852, Mowilith LDM 1871 (Mowilith materials commercially available from Celanese), Vinnapas EP 3360 (commercially available from Wacker Chemie).

The dry weight ratio of (a) to (b) may be in the range of from 65:35 to 20:80, such as from 60:40 to 22:78. The dry weight ratio of (a) to (b) may be in the range of from 57:43 to 23:77, such as in the range of from 55:45 to 25:75. The dry weight ratio of (a) to (b) may be in the range of from 53:47 to 27:73.

The dry weight ratio of (a) to (b) is at most 70:30, such as 65:35, or 60:40. The dry weight ratio of (a) to (b) may be at most 57:43, such as 55:45, or 53:47.

The dry weight ratio of (a) to (b) is at least 20:80, such as 22:78, or 23:77. The dry weight ratio of (a) to (b) is at least 25:75, such as 26:74, or 27:73.

The coating composition may comprise any suitable amount of the first polymeric coating binder. The coating composition may comprise at least 1 wt% (by dry weight of the binder), such as at least 2 wt%, such as at least 3 wt%, or even at least 4 wt% of the first polymeric coating binder based on the total weight of the coating composition. The coating composition may comprise up to 15 wt% (by dry weight of the binder), such as up to 14 wt%, such as up to 12 wt%, such as up to 10 wt%, such as up to 9 wt%, or even up to 8 wt% of the first polymeric coating binder based on the total weight of the coating composition. The coating composition may comprise from 1 to 15 wt% (by dry weight of the binder), such as from 1 to 14 wt%, such as from 1 to 12 wt%, such as from 1 to 10 wt%, such as from 1 to 9 wt%, or even from 1 to 8 wt% of the first polymeric coating binder based on the total weight of the coating composition. The coating composition may comprise from 2 to 15 wt% (by dry weight of the binder), such as from 2 to 14 wt%, such as from 2 to 12 wt%, such as from 2 to 10 wt%, such as from 2 to 9 wt%, or even from 2 to 8 wt% of the first polymeric coating binder based on the total weight of the coating composition. The coating composition may comprise from 3 to 15 wt% (by dry weight of the binder), such as from 3 to 14 wt%, such as from 3 to 12 wt%, such as from 3 to 10 wt%, such as from to 3 to 9 wt%, or even from 3 to 8 wt% of the first polymeric coating binder based on the total weight of the coating composition. The coating composition may comprise from 4 to 15 wt% (by dry weight of the binder), such as from 4 to 14 wt%, such as from 4 to 12 wt%, such as from 4 to 10 wt%, such as from 4 to 9 wt%, or even from 4 to 8 wt% of the first polymeric coating binder based on the total weight of the coating composition.

The coating composition may comprise from 1 to 15 wt% (by dry weight of the binder) of the first polymeric coating binder based on the total weight of the coating composition.

The coating composition may comprise from 2 to 12 wt% (by dry weight of the binder) of the first polymeric coating binder based on the total weight of the coating composition.

The coating composition may comprise from 3 to 10 wt% (by dry weight of the binder) of the first polymeric coating binder based on the total weight of the coating composition.

The coating composition may comprise from 4 to 8 wt% (by dry weight of the binder) of the first polymeric coating binder based on the total weight of the coating composition.

The coating composition may comprise any suitable amount of the second polymeric coating binder. The coating composition may comprise at least 2 wt% (by dry weight of the binder), such as at least 4 wt%, such as at least 5 wt%, or even at least 6 wt% of the second polymeric coating binder based on the total weight of the coating composition. The coating composition may comprise up to 20 wt% (by dry weight of the binder), such as up to 16 wt%, such as up to 14 wt%, such as up to 12 wt%, such as up to 11 wt% of the second polymeric coating binder based on the total weight of the coating composition. The coating composition may comprise from 2 to 20 wt% (by dry weight of the binder), such as from 2 to 16 wt%, such as from 2 to 14 wt%, such as from 2 to 12 wt%, such as from 1 to 11 wt% of the second polymeric coating binder based on the total weight of the coating composition. The coating composition may comprise from 4 to 20 wt% (by dry weight of the binder), such as from 4 to 16 wt%, such as from 4 to 14 wt%, such as from 4 to 12 wt%, such as from 4 to 11 wt% of the second polymeric coating binder based on the total weight of the coating composition. The coating composition may comprise from 5 to 20 wt% (by dry weight of the binder), such as from 5 to 16 wt%, such as from 5 to 14 wt%, such as from 5 to 12 wt%, such as from to 5 to 11 wt% of the second polymeric coating binder based on the total weight of the coating composition. The coating composition may comprise from 6 to 20 wt% (by dry weight of the binder), such as from 6 to 16 wt%, such as from 6 to 14 wt%, such as from 6 to 12 wt%, such as from 6 to 11 wt% of the second polymeric coating binder based on the total weight of the coating composition.

The coating composition may comprise from 2 to 20 wt% (by dry weight of the binder) of the second polymeric coating binder based on the total weight of the coating composition.

The coating composition may comprise from 4 to 16 wt% (by dry weight of the binder) of the second polymeric coating binder based on the total weight of the coating composition.

The coating composition may comprise from 5 to 14 wt% (by dry weight of the binder) of the second polymeric coating binder based on the total weight of the coating composition.

The coating composition may comprise from 6 to 12 wt% (by dry weight of the binder) of the second polymeric coating binder based on the total weight of the coating composition.

The coating composition may further comprise:

c) a first filler, wherein the first filler comprises expanded polymeric microspheres; and
d) a second filler, wherein the second filler comprises expanded glass particles.

The coating composition may comprise at least 0.1% by weight and at most 25% by weight of said first filler and second filler combined, based on the total weight of the composition.

Where present, the first filler is different from the second filler (and both the first filler and the second filler are different from the first polymeric coating binder and the second polymeric coating binder).

The first filler comprises expanded polymeric microspheres. By "microsphere", and like terms, as used herein is meant particles with an average ($D_{50}$) particle size from 0.1 to 500 microns ($\mu$m), such as from 1 to 300 $\mu$m, such as from 10 to 200 $\mu$m, such as from 20 to 80 $\mu$m, or even from 30 to 50 $\mu$m. The microspheres may be generally spherical. The microspheres may be solid or may comprise a cavity. The microspheres may comprise a cavity. The cavity may be empty or may comprise a gas and/or a liquid. The cavity may be completely closed off for material exchange with the environment or may be open towards the environment.

As reported herein, the particle size was determined according to the International Standard ISO 13320:2009 ("Particle size analysis - Laser diffraction methods") using laser diffraction analysis on a Malvern type analyser. Suitable Malvern systems include the Malvern 2000, Malvern MasterSizer (such as Mastersizer S), Malvern 2600 and Malvern 3600 series. All values for average particle size reported herein were measured in this way.

The first filler may comprise any suitable expanded polymeric microspheres. Suitable examples of expanded polymeric microspheres include, but are not limited to, expanded particles of a polymer selected from: a polyurethane, a polystyrene, a polyvinylidene chloride, a polyacrylate, a polymethyl methacrylate (PMMA), a polyacrylonitrile, or copolymers or combinations thereof.

The first filler may comprise expanded particles of a copolymer of vinylidene chloride and acrylonitrile.

The first filler may comprise pure polymeric particles.

The first filler may comprise a commercially available filler. Suitable commercially available fillers for the first filler include, but are not limited to, those sold under the trade name Micropearl (RTM) microspheres available from Lehmann & Voss, those sold under the trade name Expancel (RTM) available from AkzoNobel, those sold under the trade name Advancell (RTM) expandable microspheres available from Sekisui Chemical Co., those sold under the trade name Microsphere (RTM), such as Microsphere F-E and Microsphere F-DE, available from Matsumoto Yushi Seiyaku Co. and combinations thereof.

The first filler may have any suitable true density. The first filler may have a true density of at most 100 kg/m$^3$, such as at most 75 kg/m$^3$, such as at most 60 kg/m$^3$, such as at most 50 kg/m$^3$, or even at most 40 kg/m$^3$ as determined according to ASTM D2840 (1969) using a gas displacement pycnometer.

The first filler may comprise expanded particles having a true density of up to 500 kg/m$^3$ determined by gas displacement pycnometer according to ASTM D2840 (1969).

Where present, the second filler comprises expanded glass particles. The second filler may comprise expanded perlite particles, expanded silica glass particles and/or combinations thereof. Examples of suitable expanded silica glass particles include, but are not limited to, borosilicate glass, fused borosilicate glass, soda-lime-borosilicate glass, natural volcanic ore and combinations thereof.

The second filler may comprise expanded perlite particles, expanded fused borosilicate glass particles or combinations thereof.

The second filler may comprise expanded fused borosilicate glass particles.

The second filler may have any suitable silica content. The second filler may have a silica content from 50 to 100 wt%, such as from 60 to 90 wt%, such as from 70 to 80 wt%, such as from 75 to 80 wt%, or even from 75 to 78 wt% based on the total solid weight of the second filler.

The second filler may have any suitable true density. The second filler may have a true density of up to 750 kg/m$^3$, such as up to 600 kg/m$^3$, such as up to 500 kg/m$^3$, or even up to 400 kg/m$^3$ as determined according to ASTM D2840 (1969) using a gas displacement pycnometer.

The second filler may comprise a commercially available filler. Suitable commercially available fillers include, but are not limited to, those sold under the trade names Poraver (RTM) available from Dennert Poraver, those sold under the trade name Sphericel (RTM) available from Potters Industries, those sold under the trade name Metapor (RTM) available from Dennert Poraver, Glass bubbles manufactured by 3M or combinations thereof.

The coating composition may comprise any suitable amount of the first filler and the second filler combined. The coating composition may comprise at least 0.1% by weight and at most 25% by weight of the first filler and the second filler combined based on the total weight of the coating composition, such as at least 0.5% by weight and at most 20% by weight, such as at least 1.5% by weight and at most 15% by weight, or even at least 3% by weight and at most 10% by weight.

The coating composition may comprise any suitable weight ratio of first filler to second filler. The weight ratio of first filler to second filler may be at least 1:40, such as at least 1:30, such as at least 1:20, such as at least 1:18, or even at least 1:15. The weight ratio of first filler to second filler may be up to 1:10, such as up to 1:5, such as up to 1:7, such as up to 1:10, such as up to 1:12, or even up to 1:14. The weight ratio of first filler to second filler may be from 1:40 to 1:1, such as from 1 :30 to at most 1:5, such as from 1:20 to 1:7, such as from 1:18 to at most 1:10, such as from 1:15 to 1:12, or even from 1:15 to 1:14. The effect of the above mentioned weight ratios of first filler to the second filler may result in an optimal balance between low density and coating performance. Typically, the more first filler used compared to the second filler, the lower the density but the higher the impact on coating performances.

The first filler and the second filler combined may have a true density of at most 750 kg/m$^3$, such as at most 600 kg/m$^3$, such as at most 500 kg/m$^3$, or even at most 400 kg/m$^3$ as determined according to ASTM D2840 (1969) using a gas displacement pycnometer.

The coating composition may optionally comprise at least one colourant. Suitable colourants will be known to a person skilled in the art. Examples of suitable colourants include, but are not limited to, inorganic pigments, organic pigments, transparent pigments, non-transparent pigments and combinations thereof. Examples of such pigments include, but are not limited to, titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, phthalocyanines, thioindigos, quinacridones and diketo-pyrrolopyrroles; extender pigments including ground and crystalline silica, barium sulphate, magnesium silicate, calcium silicate, mica, micaceous iron oxide, calcium carbonate, zinc oxide, aluminium hydroxide, aluminium silicate and aluminium silicate, gypsum, feldspar, talcum, kaolin, and the like; and combinations thereof.

The coating compositions may comprise any suitable amount of colourant. It will be understood that the amount of colourant that is used may vary, depending on the particular end use of the coating composition and can be zero when a clear coating composition is desired.

The coating composition may comprise up to 50 wt%, for example up to 40 wt%, or even up to 35 wt%, such as up to 30 wt% colourant based on the total solid weight of the coating composition. The coating composition may comprise from 0 wt%, for example from 0.5 wt%, such as from 1 wt% or even from 2 wt% colourant based on the total solid weight of the coating composition.

Depending on the particular end use of the coating composition, the coating composition may comprise from 0 to 30 wt%, or 1 to 30 wt% colourant based on the total solid weight of the coating composition.

The coating composition may have any suitable ratio of pigment volume concentration (PVC) over critical pigment volume concentration (cPVC). The ratio of the pigment volume concentration (PVC) over the critical pigment volume concentration (cPVC) may be from 0.6 to 1.3, such as from 0.7 to 1.3, such as from 0.8 to 1.27, such as from 0.8 to 1.2, such as from 0.9 to 1.25, such as from 0.9 to 1.24, such as from 0.95 to 1.23, such as from 0.97 to 1.22, such as from 0.99 to 1.21, or even from 1.05 to 1.2.

The coating composition may optionally comprise one or more further filler(s), such as expanded fillers, non-expanded fillers and/or combinations thereof. For the avoidance of doubt, the further filler may be different to the first and second fillers as described above, where present. Examples suitable non-expanded fillers include, but are not limited to: silica, such as precipitated silicas; clay; mica; dolomite; talc; zinc borate; magnesium carbonate; calcium oxide; calcium carbonate; calcium silicate; sodium aluminium silicate; calcium metasilicate; titanium dioxide; barium sulphate; and combinations thereof. The one or more further non-expanded filler may comprise a fibrous filler, such as milled glass fibres and/or milled carbon fibres. Examples of suitable expanded fillers are as described above in relation to the first filler and/or second filler, on the proviso that the one or more further filler(s) is different from the first filler and the second filler, where present.

The coating composition may comprise any suitable amount of colourant and/or filler. For the avoidance of doubt, in this context, the amount of filler is calculated on the basis of the total amount of filler present in the coating composition (including the first filler, second filler (where present) and further filler(s)). The coating composition may comprise from 10 to 70 wt%, such as from 15 to 65 wt%, such as from 20 to 60 wt%, such as from 25 to 55 wt%, or even from 30 to 45 wt% of colourant and/or filler based on the total weight of the coating composition.

The first filler and second filler, where present, are expanded fillers and, as such, may be lightweight fillers. The one or more further filler(s) may comprise a lightweight filler. By "lightweight filler", and like terms, as used herein is meant that the filler has a true density of at most 500 kg/m$^3$, as determined according to ASTM D2840 (1969) using a gas displacement pycnometer. For the avoidance of doubt, a lightweight filler does not have to be an expanded filler so long as it has the required true density.

The coating composition may comprise any suitable total amount of lightweight filler (i.e. total amount of lightweight filler including the first filler, the second filler (where present) and any further lightweight filler). The coating composition may comprise from 1 to 70 wt%, such as from 5 to 50 wt%, such as from 10 to 30 wt%, such as from 12 to 25 wt%, or even from 16 to 20 wt% of the lightweight filler based on the total solid weight of the fillers present in the coating composition. In this context, titanium dioxide is seen as a filler, such as a non-expanded filler. Titanium dioxide is a filler that also functions as a colourant. For the avoidance of doubt, when taking the weight into account, titanium dioxide should be classed as a filler and not as a colourant or additive.

The coating composition may have any suitable solid content. The coating composition may have a solid content from 40 to 80 wt%, such as from 45 to 75 wt%, such as from 50 to 70 wt%, or even from 52 to 68 wt% based on the total weight of the coating composition. As reported herein, the solid content was measured at 125° C for two hours according to ISO 3251:2008. All values for solid content reported herein were measured in this way.

The coating composition may be a water-borne coating composition, a solvent borne coating or a powder coating composition.

The coating composition may be a water-borne coating composition. The water-borne coating composition may comprise any suitable amount of water. The water-borne coating composition may comprise from 10 to 60 wt%, such as from 15 to 55 wt%, or even from 20 to 50 wt% water based on the total weight of the coating composition. Water may be added to the coating composition as such, e.g. tap water, or may be added in combination with another component of the coating composition, such as the first polymeric coating binder, which may be emulsified or suspended in water. For example, the first polymeric coating binder may be added to the coating composition as suspension or emulsion, such as a 45 to 55 wt% suspension based on the total weight of the first polymeric coating binder.

The coating composition may optionally include one or more solvents, such as organic solvents. Suitable solvents will be known to a person skilled in the art. Examples of suitable solvents include, but are not limited to, aliphatic solvents, such as VM&P NAPTHA (available from Klean Strip); acetates, such as butyl acetate and hexyl acetate; mono and dialkyl ethers of ethylene, propylene and diethylene glycols, such as ethylene glycol monoethyl ether, ethylene glycol monobutyl ether, diethylene glycol diethyl ether, propylene glycol monomethyl ether, and dipropylene glycol ether; monoalkyl ethers of monoester glycols, such as ethylene glycol monoethylether acetate and propylene glycol monomethyl ether acetate; and combinations thereof. The coating composition may comprise any suitable amount of solvent. The coating composition may comprise up to 20 wt% solvent based on the total solid weight of the first polymeric coating binder. The use of one or more solvent(s) may facilitate film forming, adjust drying properties and/or contribute to the application performances.

The coating composition may optionally comprise other materials (or additives) well known in the art of formulating coatings. Examples of suitable additives that may be added to the composition may be found in Additives Guide, Paint & Coatings Magazine, May 2006, hereby incorporated by reference thereto. Suitable examples of additives include, but are not limited to, catalysts, other pigments and pigment pastes, dyes, surface active agents, stabilizers, wetting agents, thixotropic agents, anti-sagging agents, anti-oxidants, bactericides, fungicides, algaecides, anti-settling agents, insecticides, antifoaming agents, slip agents, flow and levelling agents, rheological modifiers, UV-absorbers, HALS-radical scavengers, matting agents, waxes, mineral oils, flame retardants, loss of dry inhibitors, optical brighteners, adhesion promoters, diluents, elastomers, plasticizers, air release agents, absorbents, anti-crater additives, coalescing agents, reinforcing agents, polymeric opacifier dispersing aids, plasticizers, thixotropes, substrate wetting agents, odorants, corrosion inhibitors and corrosion-inhibitive pigments, additional hardeners, additional curable compounds and combinations thereof. It will be appreciated by a person skilled in the art that the use of the aforementioned materials will typically depend on the particular end use of the coating composition.

Examples of suitable surface active agents include, but are not limited to, any of the well-known anionic, cationic or non-ionic surfactants or dispersing agents.

Examples of suitable antioxidants and UV light absorbers include, but are not limited to, those sold under the trademarks IRGANOX and TINUVIN (RTM) commercially available from BASF.

Examples of suitable thixotropes include, but are not limited to, fumed silica, bentonite, stearic acid-coated calcium carbonate, polyamide, fatty acid/oil derivatives and combinations thereof.

The additives may be selected from the group comprising: wetting agents, antifoaming agents, rheological modifiers, coalescing agents, dispersing aids and combinations thereof.

The coating compositions may comprise any suitable amount of the additives, when used. The coating composition may comprise up to 40 wt%, such as up to 30 wt%, such as up to 20 wt%, such as up to 15 wt%, or even up to 10 wt% of the additives based on total weight of the coating composition.

The coating compositions may have any suitable relative density. The coating composition may have a relative density from 0.8 to 1.7, such as from 0.9 to 1.6, such as from 1 to 1.5, such as from 1.1 to 1.45, such as from 1.2 to 1.4, or even from 1.3 to 1.4.

Where the coating composition comprises a first filler and second filler as discussed above, the coating composition may have a relative density from 0.8 to 1.3, such as from 0.9 to 1.2, such as from 1 to 1.3, such as from 1 to 1.2, such as from 1 to 1.15, or even from 1.05 to 1.1. Such densities may make the coating composition particularly suitable for interior use.

As reported herein, the true density of the coating composition was measured according to ISO 2811-1 (2011) at 20°C using a metal pycnometer. All values for true density reported herein were measured in this way

The coating compositions may be formulated as a 1K composition (also known as a one-component composition or one package composition). By "1K", "one component composition", "one package composition", and like terms, as used herein is meant a stable one package composition. A 1K, one component or one package composition will be understood as referring to a composition wherein all of the components are maintained in the same container after manufacture, during storage etc. A 2K composition or a multi-component composition will be understood as referring to a composition wherein various components are maintained separately until just prior to application.

The coating compositions may provide any suitable finish upon curing. The coating composition may comprise a matt finish upon curing, an egg-shell finish upon curing or a semi-gloss finish upon curing. The coating compositions may provide a gloss level upon curing of up to 45%, such as up to 30%, such as up to 20%, such as up to 15%, such as up to 10%, such as up to 7%, such as up to 5%, or even up to 2.5%, as determined according to NF EN ISO 2813 (as measured using a gloss meter, under an angle of 60° and on a 2 x 200 μm cured layer of coating composition). It will be appreciated by a person skilled in the art that the gloss level will typically depend upon the particular finish, i.e. matt, egg-shell or semi-gloss, which is desired. For example, when a matt finish is desired, the gloss level of the cured coating composition may be up to 20%, such as up to 15%, such as up to 10%, such as up to 7%, such as up to 5%, or even up to 2.5%, as determined according to NF EN ISO 2813 (as measured using a gloss meter, under an angle of 85° and on a 2 x 200 μm cured layer of coating composition).

The coating compositions may have any suitable volatile organic compound (VOC) content. By "volatile organic compound", and like terms, as used herein is meant to any organic compound having an initial boiling point less than or equal to 250°C measured at a standard atmospheric pressure of 101 .3 kPa. The coating compositions may have a VOC content of at most 150 g/l, such as at most 100 g/l, such as at most 75 g/l, such as at most 50 g/l, such as at most 40 g/l, or even at most 20 g/l, or even at most 10 g/l, or even at most 5 g/l, or even at most 1 g/l as determined according to ISO 1 1890-2 (2013).

The cured coating composition may have any suitable water-vapour transmission rate (Sd). The cured coating composition may have a water-vapour transmission rate (Sd) from 0.5 to 1.5 m, such as from 0.7 to 1.3 m, or even from 0.8 to 1.2 m, as determined according to ISO 7783-2 (201 1) 8.1.1.

The cured coating compositions may have any suitable water-vapour transmission (V). The cured coating compositions may have a water-vapour transmission (V) from 30 to 420 g/m$^2$, such as from 21 to 420 g/m$^2$, such as from 35 to 300 g/m$^2$, or even from 42 to 210 g/m$^2$, as determined according to ISO 7783-2 (201 1) 8.1.1.

The coating composition may be applied to various substrates. Suitable substrates include, but are not limited to: wood; paper; dry wall; synthetic materials, such as plastics, including elastomeric substrates; glass; ceramic; metals, such as iron, steel or aluminium; concrete; plasterboard; gypsum-board; mortar; brick; and the like; and combinations thereof.

The substrate may comprise concrete, dry walls, brick or combinations thereof.

Thus, there is also provided a substrate coated on at least a portion thereof with a coating, the coating being derived from a coating composition according to the present invention.

The substrates may be pre-treated before application of the coating composition. The substrates may be post-treated after application of the coating composition. The substrates may be post-treated after application of the coating composition with any other compositions (which will be known to a person skilled in the art).

The coating composition of the present invention may be used and/or formulated as a coating, varnish, lacquer, paint, stain, enamel, printing ink and/or floor covering. Thus, there is also provided the use of the coating compositions of the present invention as a coating, varnish, lacquer, paint, stain, enamel, printing ink or floor covering.

The coating composition may be a wall paint, such as an interior wall paint or an exterior wall paint.

Wall paints typically differ from metal coatings, for example. A metal coating would typically use a polymeric binder that would be suitable for metal application that requires adhesion on metallic material, anti-flash rust additives, anticorrosive properties and low water vapour permeability. Wall paints typically have high water vapour permeability, which is too high for metal, have poor adhesion on metal and have no metal protection ability (i.e. have no anticorrosive properties).

The coating composition may be an interior wall masonry paint.

The coating composition may be an exterior wall masonry paint.

Thus, there is provided the use of the coating composition of the present invention as an interior and/or exterior wall masonry paint.

The coating composition may be applied to the substrate by any suitable methods. Methods of applying to coating composition will be known to a person skilled in the art. Suitable application methods for the coating compositions include, but are not limited to, spreading (e.g., with paint pad or doctor blade, or by brushing or rolling), spraying (e.g., air-fed spray, airless spray, hot spray, and electrostatic spray), flow coating (e.g., dipping, curtain coating, roller coating, and reverse roller coating), electrodeposition and combinations thereof. Suitable application methods are described in R. Lambourne, Editor, Paint and Surface Coating: Theory and Practice, Eilis Horwood, 1987, page 39 et seq., for example.

The coating composition may be applied to the substrate by spreading and/or spraying, such as by brushing, rolling or airless spraying.

The coating composition may be applied to the substrate and cured. The coating composition may be cured by any suitable method. For example, the coating composition may be cured by heat curing or chemically curing. The coating composition may be fully curable at ambient temperature conditions, for example in the range from 0 to 50°C, such as from 1 to 45°C, such as from 3 to 40°C, or even from 5 to 35°C. Curing of the coating composition may proceed very rapidly at the aforementioned temperature ranges.

The coating composition may be used as a single coating, a top coating, a base coating in a two-layered system, or one or more layers of a multi-layered system including a top coating composition, base coating composition, or as a primer layer. A typical opaque system may comprise: 1 layer of primer and 1 or 2 layers of top coat (a total of 2 to 3 layers), for example. Alternative opaque systems may comprise: 1 primer layer, 1 layer of mid coat and 1 layer top coat, for example.

As used herein, unless otherwise expressly specified, all numbers such as those expressing values, ranges, amounts or percentages may be read as if prefaced by the word "about", even if the term does not expressly appear. Also, the recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Singular encompasses plural and vice versa. For example, although reference is made herein to "a" coating composition, "a" filler material, "an" acid group, "an" alcohol group, and the like, one or more of each of these and any other components can be used. As used herein, the term "polymer" refers to oligomers and both homopolymers and copolymers, and the prefix "poly" refers to two or more.

Unless defined otherwise, all technical and scientific terms used herein have the same meaning as is commonly understood by one of skill in the art. All publications referenced herein are incorporated by reference thereto.

The terms "comprising", "comprises" and "comprised of" as used herein are synonymous with "including", "includes" or "containing", "contains", and are inclusive or open-ended and do not exclude additional, non-recited members, elements or method steps. Additionally, although the present invention has been described in terms of "comprising", the coating compositions detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

All of the features contained herein may be combined with any of the above aspects in any combination.

For a better understanding of the invention, and to show how embodiments of the same may be carried into effect, reference will now be made, by way of example, to the following examples.

## EXAMPLES

### Coating examples 1 and 2

Coating examples 1 and 2, which contain a first and second polymeric coating binder according to the present invention, were prepared according to the formulations in Table 1. All parts are given in parts by weight (pbw) unless specified otherwise.

### Comparative coating examples 1 and 2

Comparative coating examples 1 and 2, which contain a first polymeric coating binder, but not a second polymeric coating binder, were prepared according to the formulations in Table 1. All parts are given in parts by weight (pbw) unless specified otherwise.

### Coating examples 3 and 4

Coating examples 3 and 4, which contain a first and second polymeric coating binder according to the present invention, were prepared according to the formulations in Table 2. All parts are given in parts by weight (pbw) unless specified otherwise.

### Test methods

### Rain Resistance Test

Paint is applied on fiber-cement panels primed with a quartz containing blue primer to create a surface roughness and colour contrast. The coating composition is applied to the blue panels at a given spreading rate and drying conditions are controlled (humidity and temperature). The coated panels are then washed (subjected to a water rinsing spray) at a given time interval. The results are given a score between 0 and 3, which is evaluated using the following scale:

    Score = 0 Coating completely removed from panel
    Score = 1 Some coating remains, but less than 50% adhered to panel
    Score = 2 50 to 75% of coating adhered to panel
    Score = 3 greater than 75% of coating adhered to panel

### 10 Minute Early Rain Resistance

Panels were prepared according to the Rain Resistance Test protocol and coatings applied thereto with a spreading rate of 7m$^2$/l. The rain resistance test was undertaken under regular conditions (humidity of 50% and temperature of 23°C). The panels were then subjected to a water rinsing spray after 10 minutes of applying the coating composition and the results graded 0 to 3, as discussed above.

### Rain Resistance

Panels were prepared according to the Rain Resistance Test protocol and coatings applied thereto with a spreading rate of 7m$^2$/l. The rain resistance test was undertaken under either regular conditions (humidity of 50% and temperature of 23°C) or severe conditions (humidity of 85% and temperature of 5°C). The panels were the evaluated to give the drying time required to achieve a score of 3 on the Rain Resistance Test discussed above.

For the avoidance of doubt, the components used in the formulations in Table 1 are as follows:

    Acronal Edge 6390        an aqueous acrylic copolymer dispersion available from BASF.

(continued)

| Axilat DS2100 | an aqueous styrene acrylate resin commercially available from Synthomer. |
| Ucar Latex 420 G | an aqueous styrene acrylate resin commercially available from Dow Chemicals. |

Table 1

| | Example 1 | Comparative Ex. 1 | Example 2 | Comparative Ex. 2 |
| | Wt % | Wt % | Wt % | Wt % |
|---|---|---|---|---|
| Water | 25.24 | 25.21 | 15.51 | 15.52 |
| Methyl hydroxyethyl cellulose | 0.05 | 0.05 | 0.05 | 0.05 |
| Foam control agent | 0.20 | 0.20 | 0.20 | 0.20 |
| Ammonia 20% | 0.05 | 0.05 | 0.05 | 0.05 |
| Polyacrylate ammonium salt | 0.39 | 0.40 | 0.40 | 0.40 |
| Biocide | 0.65 | 0.66 | 0.66 | 0.67 |
| Talc | 3.52 | 3.56 | 4.82 | 4.84 |
| $CaCO_3$ | 22.81 | 23.10 | 31.23 | 31.36 |
| $TiO_2$ | 14.56 | 14.75 | 14.95 | 15.01 |
| Modified Urea solution | 0.20 | 0.20 | 0.20 | 0.20 |
| Texanol | 2.47 | 1.49 | 1.54 | 2.55 |
| ACRONAL EDGE 6390X | 14.63 | 28.30 | 14.35 | 28.81 |
| AXILAT DS 2100 | 13.97 | 0.00 | 15.02 | 0.00 |
| Foam control agent | 0.20 | 0.20 | 0.20 | 0.20 |
| Polyurethane thickener | 0.78 | 0.69 | 0.41 | 0.15 |
| Rheology modifier | 0.29 | 1.14 | 0.40 | 0.00 |
| Dry extracts of Acronal Edge 6390 X and Axilat DS 2100 are 50% | | | | |
| ACRONAL EDGE 6390X (Dry wt) | 7.3 | 14.2 | 7.2 | 14.4 |
| AXILAT DS 2100 (Dry wt) | 7.0 | 0.0 | 7.5 | 0.0 |
| | | | | |
| Water vapour permeability (sd) | 1.12 | 1.19 | 1.01 | 1.11 |
| 10 min Early rain resistance (0 to 3) | 1 | 1 | | |
| Early rain resistance (severe conditions) (hrs) | | | 3 | 3 |

Table 2

| | Example 3 | Example 4 |
| | Wt% | Wt% |
|---|---|---|
| Water | 24.75 | 24.75 |
| Methyl hydroxyethyl cellulose | 0.30 | 0.30 |
| Foam control agent | 0.30 | 0.30 |
| Ammonia 20% | 0.05 | 0.05 |
| Polyacrylate ammonium salt | 0.39 | 0.39 |

(continued)

| | Example 3 | Example 4 |
|---|---|---|
| | Wt% | Wt% |
| Biocide | 0.43 | 0.43 |
| Talc | 13.69 | 13.69 |
| $TiO_2$ | 14.74 | 14.74 |
| $CaCO_3$ | 12.97 | 12.97 |
| Texanol | 2.50 | 2.50 |
| UCAR LATEX 420-G | 14.81 | 20.33 |
| ACRONAL EDGE 6390X | 14.15 | 8.64 |
| Rheology modifier | 0.89 | 0.89 |
| | | |
| Dry wt% | | |
| UCAR LATEX 420-G (dry wt%) | 7.40 | 10.16 |
| ACRONAL EDGE 6390X (dry wt%) | 7.08 | 4.32 |
| Total dry wt% binders | 14.48 | 14.48 |
| | | |
| Water vapour permeability (sd) | 1.18 | 1.03 |
| | | |
| Early rain resistance - regular conditions | 4 h 00 | 4 h 00 |
| Early rain resistance - severe conditions | 5 h 30 | 5 h 30 |

In example 1 and 2, the water vapour permeability is reduced vs the comparative example, but the early rain resistance is unaffected. Although the early rain resistance results are relatively low, after only 10 minutes of cure, this is an acceptable result.

In example 3, the ratio of the first polymeric coating binder to the second polymeric coating binder is approximately 50:50, whereas in example 4, the ratio of the first polymeric coating binder to the second polymeric coating binder is approximately 30:70. Moving to an excess of the second polymeric coating binder in example 4 has significantly reduced the water vapour permeability of the coating composition. However, the early rain resistance results of these two examples are the same.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A coating composition comprising:

(a) a first polymeric coating binder, wherein the first polymeric coating binder comprises:

(i) an aqueous polymer latex of a film forming carboxylated polymer; and
(ii) a branched polyetheramine polyol dissolved in the aqueous phase of the polymer latex, wherein essentially all of the amino groups in the branched polyetheramine polyol are tertiary amine groups; and

(b) a second polymeric coating binder, wherein the second polymeric coating binder comprises an acrylic binder;

wherein the dry weight ratio of (a) to (b) is in the range of 70:30 to 20:80.

2. A coating composition according to claim 1, wherein the first polymeric coating binder is present in the coating composition in an amount of from 3 to 10 wt% (based on dry weight of the first polymeric coating binder).

3. A coating composition according to either of claim 1 or claim 2, wherein the second polymeric coating binder is present in the coating composition in an amount of from 5 to 14 wt% (based on dry weight of the second polymeric coating binder).

4. A coating composition according to any preceding claim, wherein the dry weight ratio of (a) to (b) is from 60:40 to 22:78.

5. A coating composition according to any preceding claim, wherein the total solid content of the coating composition is from 50 to 70 wt%.

6. A coating composition according to any preceding claim, wherein the branched polyetheramine polyol has a hydroxyl number from 100 to 800 mg KOH/g.

7. A coating composition according to any preceding claim, wherein the branched polyetheramine polyol is formed from monomers comprising at least one trialkanolamine or a mixture of at least one trialkanolamine with an aliphatic or cycloaliphatic polyol.

8. A coating composition according to any preceding claim, wherein the branched polyetheramine polyol is formed from monomers comprising at least one trialkanolamine or a mixture of at least one trialkanolamine with an aliphatic or cycloaliphatic polyol.

9. A coating composition according to any preceding claim, wherein the carboxylated polymer is formed from:

(A) 70 to 99.95 w% of monomers selected from the group consisting of $C_1$-$C_{20}$-alkyl esters of $C_3$-$C_6$ monoethylenically unsaturated monocarboxylic acids, di-$C_1$-$C_{20}$-alkyl esters of $C_4$-$C_6$ monoethylenically unsaturated dicarboxylic acids, $C_5$-$C_{20}$-cycloalkyl esters of $C_3$-$C_6$ monoethylenically unsaturated monocarboxylic acids, vinylesters of $C_1$-$C_{20}$-alkanoic acids, vinyl aromatic monomers, $C_2$-$C_6$-monoolefines and butadiene, based on the total solid weight of the monomers from which the carboxylated polymer is formed;
(B) 0.05 to 10 wt% of monomers selected from the group consisting of monoethylenically unsaturated $C_3$-$C_6$ monocarboxylic acids and monoethylenically unsaturated $C_4$-$C_6$ dicarboxylic acids, based on the total solid weight of the monomers from which the carboxylated polymer is formed; and
(C) 0 to 20 wt% of one or more monomers selected from the group consisting of primary amides of monoethylenically unsaturated $C_3$-$C_8$ monocarboxylic acids, monoethylenically unsaturated monomers bearing urea or keto groups, hydroxyalkyl esters of monoethylenically unsaturated $C_3$-$C_6$ monocarboxylic acids, monoethylenically unsaturated monomers which bear at least one tri-$C_1$-$C_4$- alkoxysilane group and multiethylenically unsaturated monomers based on the total solid weight of the monomers from which the carboxylated polymer is formed,
wherein component (C) is different to component (A).

10. A coating composition according to any preceding claim, wherein the acrylic binder comprises a styrene acrylate copolymer.

11. A coating composition according to any preceding claim, wherein the acrylic binder has an Mw of from 100,000 g/mol to 400,000 g/mol.

12. A coating composition according to any preceding claim, wherein the coating composition contains 20 to 50 wt% of water based on the total weight of the coating composition.

13. A coating composition according to any preceding claim, wherein the coating composition is an architectural coating composition.

14. A coating composition according to claim 13, wherein the coating composition is an interior and/or exterior wall masonry paint.

15. Use of a coating composition as an interior and/or exterior wall masonry paint, wherein the coating composition comprises:

> (a) a first polymeric coating binder, wherein the first polymeric coating binder comprises:
>
> > (i) an aqueous polymer latex of a film forming carboxylated polymer; and
> > (ii) a branched polyetheramine polyol dissolved in the aqueous phase of the polymer latex, wherein essentially all of the amino groups in the branched polyetheramine polyol are tertiary amine groups; and
>
> (b) a second polymeric coating binder, wherein the second polymeric coating binder comprises an acrylic binder;

wherein the dry weight ratio of (a) to (b) is in the range of 70:30 to 20:80.

16. A substrate coated on at least a portion thereof with a coating, the coating being derived from a coating composition comprising:

> (a) a first polymeric coating binder, wherein the first polymeric coating binder comprises:
>
> > (i) an aqueous polymer latex of a film forming carboxylated polymer; and
> > (ii) a branched polyetheramine polyol dissolved in the aqueous phase of the polymer latex, wherein essentially all of the amino groups in the branched polyetheramine polyol are tertiary amine groups; and
>
> (b) a second polymeric coating binder, wherein the second polymeric coating binder comprises an acrylic binder;

wherein the dry weight ratio of (a) to (b) is in the range of 70:30 to 20:80.

17. A substrate according to claim 16, wherein the substrate comprises concrete, dry walls, brick or combinations thereof.

Europäisches
Patentamt

European
Patent Office

Office européen
des brevets

# EUROPEAN SEARCH REPORT

Application Number

EP 20 18 8897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/145265 A1 (BASF SE [DE]) 1 August 2019 (2019-08-01) * the whole document * * page 1, line 10 - page 2, line 18; claims 1, 2, 5, 6, 13; examples * * page 4, line 21 * | 1-17 | INV. C09D5/02 C09D125/14 C09D133/10 C09D179/02 |
| A | Dow: "Technical Data Sheet for Europe, Middle East and Africa UCAR(TM) Latex DL 420 G Acrylic Emulsion Polymer", , 31 August 2012 (2012-08-31), XP055761385, Retrieved from the Internet: URL:https://pdfslide.net/documents/ucar-la tex-dl-420-g.html [retrieved on 2020-12-18] * the whole document * | 1-17 | |
| A | CABRERA IVAN ET AL: "Acronal EDGE 6390: A novel exterior binder which extends paint application time with one single product", ACRONAL EDGE 6390, 19 September 2019 (2019-09-19), pages 1-16, XP055759305, http://www.slfpaint.org/images/Marketing/S wedish-FLF/Sverigemöte2019/BASF.pdf * the whole document * | 1-17 | TECHNICAL FIELDS SEARCHED (IPC) C09D C09J |

The present search report has been drawn up for all claims

| Place of search | Date of completion of the search | Examiner |
|---|---|---|
| Munich | 18 December 2020 | Rangheard, Claudine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 8897

This annex lists the patent family members relating to the patent documents cited in  the above-mentioned European search report.
The members are as contained in the European Patent Office EDP file on
The European Patent Office is in no way liable for these particulars which are merely given for the purpose of information.

18-12-2020

| Patent document cited in search report | | Publication date | Patent family member(s) | | Publication date |
|---|---|---|---|---|---|
| WO 2019145265 | A1 | 01-08-2019 | CN | 111655759 A | 11-09-2020 |
| | | | EP | 3743462 A1 | 02-12-2020 |
| | | | US | 2020347238 A1 | 05-11-2020 |
| | | | WO | 2019145265 A1 | 01-08-2019 |

EPO FORM P0459

For more details about this annex : see Official Journal of the European Patent Office, No. 12/82

**REFERENCES CITED IN THE DESCRIPTION**

**Non-patent literature cited in the description**

- Particle size analysis - Laser diffraction methods. *International Standard ISO 13320:2009*

- Paint and Surface Coating: Theory and Practice. Eilis Horwood, 1987, 39